# EUROPÄISCHE PATENTSCHRIFT

(11) **EP 3 190 884 B1**
(45) Veröffentlichungstag und Bekanntmachung des Hinweises auf die Patenterteilung: **17.07.2019**
(21) Anmeldenummer: 15754230.9
(22) Anmeldetag: 26.08.2015
(51) Int. Cl.: A01N 37/02, A01N 37/36, A01N 37/40, A01P 1/00

(54) **TUBERKULOZIDES DESINFEKTIONSMITTEL**
TUBERCULOCIDAL DISINFECTION AGENT
AGENT DE DÉSINFECTION TUBERCULOCIDE

(30) Priorität: 11.09.2014 DE 102014013241
(43) Veröffentlichungstag der Anmeldung: 19.07.2017
(73) Patentinhaber: Bode Chemie GmbH, 22525 Hamburg (DE)
(72) Erfinder: LINKE, Christoph, 22767 Hamburg (DE); HAASE, Delphine, 21465 Wentorf (DE); BLOSS, Richard, 25462 Rellingen (DE); KRUG, Barbara, 20259 Hamburg (DE)
(74) Vertreter: Kossak, Sabine
(86) Internationale Anmeldenummer: PCT/EP2015/069549
(87) Internationale Veröffentlichungsnummer: WO 2016/037853

(56) Entgegenhaltungen:
- EP-A1- 0 582 360
- EP-B1- 1 124 415
- WO-A1-00/06116
- WO-A1-97/47171
- WO-A1-2005/023023
- WO-A2-2004/062607
- WO-A2-2012/027140
- US-A- 5 942 478
- US-A1- 2007 275 070
- US-A1- 2012 122 757
- "List B: EPA's Registered Tuberculocide Products Effective Against Mycobacterium tuberculosis", , 1. April 2014 (2014-04-01), Seiten 1-14, XP055216102, U.S.A. Gefunden im Internet: URL:http://www.epa.gov/oppad001/list_b_tub erculocide.pdf [gefunden am 2015-09-25]
- Nurettin Sahin ET AL: "Investigation of Antimicrobial Activities of Nonanoic Acid Derivatives", Fresenius Environmental Bulletin, 1. Februar 2006 (2006-02-01), Seiten 141-143, XP055216261, Gefunden im Internet: URL:http://www.academia.edu/9558876/Invest igation_of_Antimicrobial_Activities_of_Non anoic_Acid_Derivatives [gefunden am 2015-09-25]
- A. SCHALLER ET AL: "Salicylate Reduces Susceptibility of Mycobacterium tuberculosis to Multiple Antituberculosis Drugs", ANTIMICROBIAL AGENTS AND CHEMOTHERAPY, Bd. 46, Nr. 8, 1. August 2002 (2002-08-01) , Seiten 2636-2639, XP55216405, ISSN: 0066-4804, DOI: 10.1128/AAC.46.8.2636-2639.2002
- Rene J Dubos: "THE EFFECT OF ORGANIC ACIDS ON MAMMALIAN TUBERCLE BACILLI", Journal of Experimental Medicine, 1. Oktober 1950 (1950-10-01), Seiten 319-332, XP55216424, Gefunden im Internet: URL:http://jem.rupress.org/content/92/4/31 9.full.pdf [gefunden am 2015-09-28]
- HAILER, E.: "Die Einwirkung keimtötender Stoffe auf Tuberkelbacillen des Typus humanus und bovinus II. Mitteilung. Die Wirkung von anorganischen Säuren und Säuren der aliphatischen Reihe", ZEITSCHRIFT FÜR HYGIENE UND INFEKTIONSKRANKHEITEN, Bd. 120, 1. Juli 1938 (1938-07-01), Seiten 663-677, XP009186264,
- HAILER, E.: "Die Einwirkung keimtötender Stoffe auf Tuberkelbacillen des Typus humanus und bovinus IV. Mitteilung. Versuche mit Säuren der aromatischen Reihe", ZEITSCHRIFT FÜR HYGIENE UND INFEKTIONSKRANKHEITEN, Bd. 121, 1. Dezember 1938 (1938-12-01), Seiten 405-431, XP009186261,

## Beschreibung

Gegenstand der Erfindung ist ein wässriges tuberkulozides Desinfektionsmittelkonzentrat zur Desinfektion von unbelebten Oberflächen, eine mit dem Konzentrat hergestellte Anwendungslösung und die nicht-therapeutische Verwendung des Desinfektionsmittels zur Beseitigung von Mycobacterium terrae.

Desinfektionsmittel für unbelebte Oberflächen müssen eine Vielzahl von Anforderungen erfüllen. Zum einen ist es wichtig, dass sie eine gute antimikrobielle Wirksamkeit zeigen, zum anderen dürfen sie die Materialien, auf denen die Desinfektion stattfindet nicht angreifen. Eine besondere Anforderung stellt dabei die tuberkulozide Wirksamkeit dar. Desinfektionsmittel, die für die Desinfektion von Flächen oder Instrumenten verwendet werden, müssen daher zu einer ausreichenden Abtötung des Keims M. terrae führen.

Durch Verwendung bekannter Desinfektionswirkstoffe, wie quartärer Ammoniumverbindungen, Aldehyde, Sauerstoffabspalter oder Kombinationen hiervon ist eine tuberkulozide Wirksamkeit bei niedrigen Konzentrationen und kurzen Einwirkzeiten schwer zu erreichen. Eine ausreichende tuberkulozide Wirksamkeit mit kurzen Einwirkzeiten wird lediglich durch hochalkoholische Produkte erreicht. Diese können jedoch auf empfindlichen Kunststoffoberflächen, insbesondere Polymethylmethacrylat oder Polycarbonat nicht verwendet werden, da sie aufgrund des Alkoholgehaltes diese Oberflächen angreifen.

Aus der EP 0 135 898 A2 ist ein Desinfektionsmittel-Konzentrat bekannt, dass unverzweigte und/oder verzweigte, gesättigte aliphatische Carbonsäuren mit 5-14 C-Atomen, Emulgatoren und Wasser enthält. Das Desinfektionsmittelkonzentrat zeigt eine gute Wirksamkeit gegenüber Bakterien und Pilzen. Eine tuberkulozide Wirksamkeit ist nicht beschrieben.

Die US 3,867,300 beschreibt eine Zusammensetzung mit hoher bakterizider Wirksamkeit. Die wässrige Zusammensetzung enthält eine aliphatische Monocarbonsäure mit 8-11 Kohlenstoffatomen und nichtionische oder anionische Tenside. Es ist nicht ersichtlich, ob eine tuberkulozide Wirksamkeit vorliegt.

WO2012/027140 beschreibt eine Zusammensetzung enthaltend Nonansäure und Milchsäure und ihre Verwendung in der Desinfektion von Salmonellen-verseuchtem Tierfutter.

WO2005/023023 beschreibt eine antimikrobielle Zusammensetzung enthaltend Salicylsäure, Propylenglykolmonofettsäureester und Milchsäure sowie deren Anwendung zur Reinigung von unbelebten Oberflächen.

Ein herkömmliches Desinfektionsmittel stellt das Produkt Bacillol® AF der Firma Bode Chemie dar. Dieses hat bei einer kurzen Einwirkzeit von nur 5 Minuten eine tuberkulozide Wirksamkeit. Das Produkt enthält mehrere einwertige Alkohole. Aufgrund des Alkoholgehaltes ist das Produkt nicht auf Acrylglas sowie alkohollöslichen Lacken einsetzbar.

Aufgabe der vorliegenden Erfindung ist es daher, ein Desinfektionsmittel für unbelebte Oberflächen bereitzustellen, das eine tuberkulozide Wirksamkeit bei niedrigen Konzentrationen von weniger als 2 % in der Anwendungslösung bei kurzen Einwirkzeiten hat. Die tuberkulozide Wirksamkeit des Desinfektionsmittels muss auch bei hoher organischer Belastung und ohne erhöhte Temperaturen gegeben sein, bei gleichzeitiger Wirksamkeit gegen Candida albicans und Staphylococcus aureus. Zudem soll das Desinfektionsmittel ohne toxikologisch bedenkliche Wirkstoffe, insbesondere solche die nach der Gefahrstoffrichtlinie EC Regulation Nr. 1272/2008 (CLP-Verordnung) zu vermeiden sind, auskommen. Das Desinfektionsmittel soll außerdem eine gute Materialverträglichkeit zeigen.

Die Aufgabe wird erfindungsgemäß gelöst durch ein tuberkulozides Desinfektionsmittelkonzentrat zur Desinfektion von unbelebten Oberflächen enthaltend
a. 0,9 - 20 Gew.-% einer Kombination von Salicylsäure und Nonansäure, und
   0 bis 20 Gew.-% Milchsäure,
b. mindestens ein nichtionisches Tensid,
c. ggfs. Hilfsstoffe und
d. Wasser,
wobei das Konzentrat die Komponenten a bis d enthält und die Mengenangaben jeweils bezogen sind auf die Gesamtmenge des Konzentrats.

Weitere Ausführungsformen sind Gegenstand der Unteransprüche oder nachfolgend beschrieben.

Bevorzugt enthält das erfindungsgemäße Desinfektionsmittelkonzentrat 0,9 bis 20 Gew.-% Milchsäure, bevorzugt 2,7 bis 15 Gew.-%, besonders bevorzugt 4,5 bis 15 Gew.-%, jeweils bezogen auf die Gesamtmenge des Konzentrats.

Das erfindungsgemäße Desinfektionsmittelkonzentrat enthält als organische Säuren
- Nonansäure und Salicylsäure, oder
- Milchsäure, Nonansäure und Salicylsäure.

Das erfindungsgemäße Desinfektionsmittelkonzentrat kann ggf. weitere organische Säuren, wie Zitronensäure, Pyrrolidoncarbonsäure, Benzoesäure, Benzoesäurederivate, Essigsäure, Propionsäure, Weinsäure oder Mischungen hiervon enthalten. Bevorzugt enthält das erfindungsgemäße Desinfektionsmittelkonzentrat keine organischen Säuren außer Salicylsäure, Nonansäure und Milchsäure.

In einer bevorzugten Ausführungsform enthält das erfindungsgemäße Desinfektionsmittelkonzentrat
- 4,5 - 15 Gew.-% Milchsäure, bevorzugt 9 - 15 Gew.-%,
- 2,7 - 15 Gew.-% Nonansäure, bevorzugt 4,5-15 Gew.-%, und/oder
- 0,9 - 10 Gew.-% Salicylsäure, bevorzugt 2,9 - 10 Gew.-%, jeweils bezogen auf die Gesamtmenge des Konzentrats.

In einer besonders bevorzugten Ausführungsform enthält das erfindungsgemäße Desinfektionsmittelkonzentrat
- 10,8-15 Gew.-% Milchsäure,
- 8,9 -12 Gew.-% Nonansäure und
- 2,9-7 Gew.-% Salicylsäure,
jeweils bezogen auf die Gesamtmenge des Konzentrats.

In einer weiteren bevorzugten Ausführungsform enthält das erfindungsgemäße Desinfektionsmittelkonzentrat 2,9-7 Gew.-% Salicylsäure und 8,9-12 Gew.-% Nonansäure.

Alle für die organischen Säuren angegeben Konzentrationen beziehen sich jeweils auf 100% Säure, sofern nicht anders angeben. Bevorzugt wird erfindungsgemäß bei der Herstellung der Desinfektionsmittelkonzentrate handelsübliche 90 %ige Milchsäure, 99%ige Salicylsäure und 97%ige Nonansäure verwendet.

Anstelle der freien Säure Milchsäure, Nonansäure bzw. Salicylsäure wird dem Desinfektionsmittelkonzentrat in einer Ausführungsform das Salz der organischen Säure zusammen mit einer stärkeren Säure, z.B. Salzsäure oder Schwefelsäure zugegeben. Das Salz löst sich und es bildet sich durch Zugabe der stärkeren Säure wieder die freie Säure aus. Im fertigen Desinfektionsmittelkonzentrat liegt somit auch bei dieser Ausführungsform die freie Säure vor.

Das erfindungsgemäße Desinfektionsmittelkonzentrat enthält bevorzugt mindestens ein nichtionisches Tensid, das ausgewählt ist aus:
Guerbet-Alkohol (10) -Ethoxylat (3EO), Guerbet-Alkohol (10) -Ethoxylat (5EO), Guerbet-Alkohol (10) -Ethoxylat (8EO), Octanol (C8) -Ethoxylat (4EO) [Handelsname: Dehydol 04 DEO, Fa. BASF], Nonyl-Undecanol (C9/C11)-Ethoxylat (4EO), Nonyl-Undecanol (C9/C11)-Ethoxylat (6EO), Nonyl-Undecanol (C9/C11)-Ethoxylat (8EO), Isodecanol (C10) -Ethoxylat (3EO), Isodecanol (C10) -Ethoxylat (5EO), Isodecanol (C10) - Ethoxylat (6EO), Isodecanol (C10) -Ethoxylat (7EO), Isodecanol (C10) -Ethoxylat (8EO), Isodecanol (C10) -Ethoxylat (11EO), Lauryl-Myristyl-Alkohol (C12-C14) - Ethoxylat (3EO), Lauryl-Myristyl-Alkohol (C12-C14) -Ethoxylat (4EO), Lauryl-Myristyl-Alkohol (C12-C14) -Ethoxylat (5EO), Lauryl-Myristyl-Alkohol (C12-C14) - Ethoxylat (6EO), Lauryl-Myristyl-Alkohol (C12-C14) -Ethoxylat (7EO), Lauryl-Myristyl-Alkohol (C12-C14) -Ethoxylat (9EO), Lauryl-Myristyl-Alkohol (C12-C14) - Ethoxylat (10EO), Lauryl-Myristyl-Alkohol (C12-C14) -Ethoxylat (12EO), Isotridecanol (C13) -Ethoxylat (3EO), Isotridecanol (C13) -Ethoxylat (5EO), Isotridecanol (C13) -EthoxylatEthoxylat (6EO), Isotridecanol (C13) -EthoxylatEthoxylat (7EO), Isotridecanol (C13) -EthoxylatEthoxylat (8EO), Isotridecanol (C13) -EthoxylatEthoxylat (9EO), Isotridecanol (C13) -EthoxylatEthoxylat (10EO), Isotridecanol (C13) -Ethoxylat (12EO), Isotridecanol (C13) -Ethoxylat (15EO), Nonyl-Phenol-Ethoxylat (4EO), Nonyl-Phenol-Ethoxylat (6EO), Nonyl-Phenol-Ethoxylat (7EO), Nonyl-Phenol-Ethoxylat (8EO), Nonyl-Phenol-Ethoxylat (9EO), Nonyl-Phenol-Ethoxylat (10EO), C9-C11 Alkohol Ethoxylat (11 EO), Phenol Ethoxylat (4EO), C16-18 Alkohol -Ethoxylat (25EO) [Handelsname: Marlipal 1618/25, Fa. Sasol Germany GmbH], C12-C14 Alkohol -Ethoxylat/Propoxylate (2EO/4PO), C12-C14 Alkohol -Ethoxylat/Propoxylate (5EO/4PO), C12-C14 Alkohol -Ethoxylat/Propoxylate (7,5EO/4,5PO), C13-C15 Alkohol -Ethoxylat/Propoxylate (7,5EO/4,5PO), C10-C16 Alkohol -Ethoxylat/Propoxylate (EO/PO) [Handelsname: Berol® 185, Fa. Hoesch], C12-C18 Alkohol - Ethoxylat/Propoxylate (EO/PO) [Handelsname: Plurafac LF 400, Fa. BASF], Decyl-Glukoside, Hexyl-Glukoside, Octyl-Glukoside, Decyl-Octyl-Glukoside [Handelsname: Glucopon 215 UP, Fa. BASF], Polyoxyethylen(20)-Sorbitan-Monolaurat, Polyoxyethylen(20)-Sorbitan-Monostearat, Polyoxyethylen(20)- Sorbitan- Monooleat, Castor Oil 12 EO [Handelsname: Berol® 192, Fa. Hoesch], Castor Oil 15 EO [Handelsname: Berol® 828, Fa. Hoesch], Castor Oil 20 EO [Handelsname: Berol® 829, Fa. Hoesch], Castor Oil 25 EO [Handelsname: Berol® 827, Fa. Hoesch], Castor Oil 28 EO [Handelsname: Berol® 106, Fa. Hoesch], Castor Oil 32 EO [Handelsname: Berol® 199, Fa. Hoesch] oder Mischungen dieser Tenside. Alle Handelsnamen sind beispielhaft genannt und stellen mögliche Handelsprodukte der genannten Tenside dar.

Das erfindungsgemäße Desinfektionsmittelkonzentrat enthält besonders bevorzugt mindestens ein nichtionisches Tensid, das ausgewählt ist aus:
Octanol (C8) -Ethoxylat (4EO) [Handelsname: Dehydol 04 DEO, Fa. BASF], Isodecanol (C10) -Ethoxylat (11EO) [Handelsname: Lutensol ON 110, Fa. BASF], Lauryl-Myristyl-Alkohol (C12-C14) -Ethoxylat (12EO), Isotridecanol (C13) -Ethoxylat (8EO), C9-C11 Alkohol Ethoxylat (11 EO), C16-18 Alkohol -Ethoxylat (25EO) [Handelsname: Marlipal 1618/25, Fa. Sasol Germany GmbH], C12-C18 Alkohol - Ethoxylat/Propoxylate (EO/PO) [Handelsname: Plurafac LF 400, Fa. BASF], Decyl-Octyl-Glukoside [Handelsname: Glucopon 215 UP, Fa. BASF] oder Mischungen dieser Tenside.

Das nichtionische Tensid ist in einer Ausführungsform bevorzugt ein Tensid gemäß Formel (I)

R-(O-CH₂-CH₂-)ₖ-OH

Vorzugsweise enthält der Alkylrest R gemäß Formel (I) 6 bis 10, insbesondere bevorzugt 8 Kohlenstoffatome. Bevorzugt nimmt k eine ganze Zahl zwischen 2 und 8, besonders bevorzugt zwischen 4 und 6 an. Ein bevorzugtes nichtionisches Tensid ist C8-Alkylethoxylat (4 EO), d. h. der Alkylrest R hat 8 Kohlenstoffatome und k = 4. Dieses nichtionische Tensid wird bevorzugt in Konzentraten mit Gemische von Salicylsäure und Nonansäure eingesetzt.

Bevorzugt enthalten die erfindungsgemäßen Desinfektionsmittelkonzentrat, die Nonansäure und keine Salicylsäure enthalten, als Tensid Isodecanol-(C10)-11 EO, Lauryl-Myristyl-Alkohol (C12-C14) -Ethoxylat (12EO), Isotridecanol (C13) -Ethoxylat (8EO), C9-C11 Alkohol Ethoxylat (11 EO), C16-18 Alkohol -Ethoxylat (25EO) [Handelsname: Marlipal 1618/25, Fa. Sasol Germany GmbH], Decyl-Octyl-Glukoside [Handelsname: Glucopon 215 UP, Fa. BASF] oder eine Mischung hiervon .

Bevorzugt enthalten die erfindungsgemäßen Desinfektionsmittelkonzentrat, die Salicylsäure und Nonansäure enthalten, als Tensid Octanol (C8) -Ethoxylat (4EO) [Handelsname: Dehydol 04 DEO, Fa. BASF], Isodecanol (C10) -Ethoxylat (11EO), C12-C18 Alkohol -Ethoxylat/Propoxylate (EO/PO) [Handelsname: Plurafac LF 400, Fa.BASF], Decyl-Octyl-Glukoside [Handelsname: Glucopon 215 UP, Fa. BASF], C16-18 Alkohol -Ethoxylat (25EO) [Handelsname: Marlipal 1618/25, Fa. Sasol Germany GmbH]oder eine Mischung hiervon.

Der Gehalt an nichtionischen Tensiden in dem erfindungsgemäßen Desinfektionsmittelkonzentrat beträgt vorzugsweise von 0,5 bis 55 Gew.-%, besonders bevorzugt von 0,5 bis 40 Gew.-%, besonders bevorzugt von 3 bis 30 Gew.-% gewählt, jeweils bezogen auf die Gesamtmenge des Konzentrats.

Das erfindungsgemäße Desinfektionsmittelkonzentrat enthält in weiteren Ausführungsformen zusätzlich zu den nichtionischen Tensiden anionische Tenside und/oder amphotere Tenside (Amphotenside). Bei der Verwendung von anionischen Tensiden und/oder amphoteren Tensiden werden diese bevorzugt zu jeweils 0,05 bis 20 Gew.-% eingesetzt. Als geeignete anionische Tenside werden bevorzugt Fettalkoholpolyglykolethersulfate (Ethersulfate) eingesetzt. Die Ethersulfate werden bevorzugt in Desinfektionsmittelkonzentraten eingesetzt, die ein Gemisch aus Salicylsäure und Nonansäure enthalten. Geeignete amphotere Tenside sind beispielsweise Kokosfettsäureamidopropyl-Betain (Tego® Betain F50) und N-Alkylaminopropylglycin (Rewocid® WK 30, beide Firma Evonik).

Für Desinfektionsmittelkonzentrate, die Salicylsäure enthalten, wird als Tensid bevorzugt Dehydol® 04 DEO der Firma BASF eingesetzt. Für Desinfektionsmittelkonzentrate die Nonansäure und Salicylsäure enthalten, werden bevorzugt langkettige hochmolekulare Tenside, die auch als Emulgatoren wirken, eingesetzt, besonders bevorzugt Lutensol® ON 110 der Firma BASF oder Glucopon® 215 UP der Firma BASF.

Die erfindungsgemäßen Desinfektionsmittelkonzentrate enthalten bevorzugt als Hilfsstoffe Lösungsvermittler und/oder pH-Stellmittel. Geeignete Lösungsvermittler sind beispielsweise Diethylenglykolmono-n-hexylether und/oder 1,2-Propandiol (Propylenglykol). Weitere Hilfsstoffe, die erfindungsgemäß weniger bevorzugt sind, sind Korrosionsinhibitoren, Schaumregulatoren, Dispergiermittel, Lösungsmittel, Farbstoffe, Parfüm oder Mischungen hiervon.

Bevorzugt enthalten die erfindungsgemäßen Desinfektionsmittelkonzentrat keine quartären Ammoniumverbindungen, keine Aldehyde, keine Guanidine, kein Aktivchlor, keine Amine, keine Sauerstoffabspalter, keine einwertigen Alkohole, keine aromatischen Alkohole, keine Metallionen und keine Kombinationen dieser Wirkstoffe.

Das erfindungsgemäße Desinfektionsmittelkonzentrat hat bevorzugt einen pH-Wert von 1 bis 5, besonders bevorzugt 2,5 - 3,5. Der pH-Wert kann durch Zugabe von geringen Mengen "Stellmittel", wie starken Basen oder starken Säuren, z.B. Schwefelsäure, Kaliumhydroxid, Natriumsulfit eingestellt werden.

Das erfindungsgemäße Desinfektionsmittelkonzentrat besteht bevorzugt aus
a. 0,9 - 20 Gew.-% einer Kombination von Salicylsäure und Nonansäure und
   0,1 bis 20 Gew.-% Milchsäure,
b. 0,5- 40 Gew.-% mindestens eines nichtionischen Tensids und
c. ggfs. eines anionischen Tensids und/ oder eines Amphotensid
d. Hilfsstoffen und
e. Wasser,
wobei das Konzentrat aus den Komponenten a bis e besteht und wobei sich die Komponenten zu 100 Gew.-% ergänzen.

Das erfindungsgemäße Desinfektionsmittelkonzentrat wird bevorzugt zur Herstellung von wässrigen Anwendungslösungen verwendet. Die wässrigen Anwendungslösungen enthalten 0,1 bis 10 Gew-%, bevorzugt 0,1 bis 5 Gew.-%, besonders bevorzugt 0,5 bis 3 Gew.-% des erfindungsgemäßen Desinfektionsmittelkonzentrats und Wasser.

Das erfindungsgemäße Desinfektionsmittelkonzentrat wird bevorzugt zur Desinfektion von unbelebten Oberflächen, insbesondere zu Desinfektion von Flächen und Instrumenten verwendet. Bevorzugt dient das erfindungsgemäße Desinfektionsmittelkonzentrat zur Beseitigung von Mykobakterien, insbesondere Mycobacterium terrae (M. terrae). Neben der Reduktion von Mykobakterien und der damit verbundenen mykobakteriziden Wirksamkeit, die eine tuberkulozide Wirksamkeit umfasst, kann das erfindungsgemäße Desinfektionsmittelkonzentrat auch zur Abtötung von Bakterien und Hefen verwendet werden. Es zeigt eine deutliche Levurozidie, gemessen als Wirksamkeit gegenüber C. albicans, und eine gute Bakterizidie, belegt durch die Wirksamkeit gegen E. coli, S. aureus und P. aeruginosa. Die Verwendung kann insbesondere auch bei hoher organischer Belastung erfolgen, da die Wirksamkeiten auch bei hoher organischer Belastung gegeben ist.

Besonders bevorzugt wird das erfindungsgemäße Desinfektionsmittelkonzentrat bzw. die erfindungsgemäße Anwendungslösung zur Reduktion von M. terrae und wenigstens einem der Mikroorganismen M. avium, C. albicans, E. coli, S. aureus, P. aeruginosa verwendet, insbesondere zur Reduktion von M. terrae, M. avium und C. albicans. Die Verwendung findet insbesondere bei hoher organischer Belastung, d.h. in Anwesenheit von 0,3% Albumin und 0,3% Schafserythrozyten, statt und führt auch bei hoher Belastung zu der für die gemäß DGHM oder EN-Norm zum Ausloben einer Wirksamkeit notwendige Reduktion der Keime. Das erfindungsgemäße Desinfektionsmittelkonzentrat bzw. die erfindungsgemäße Anwendungslösung hat den Vorteil, dass sie nicht nur zur Reduktion von M. terrae geeignet ist, sondern gleichzeitig auch andere Mikroorganismen, wie M. avium, C. albicans, E. coli, S. aureus, P. aeruginosa reduziert. Es ist daher möglich mit nur einem Desinfektionsmittel gleichzeitig eine Vielzahl unterschiedlicher Keime zu reduzieren.

Die Desinfektion erfolgt auch auf Oberflächen, die zumindest teilweise aus Kunststoffen bestehen. Wenn Kunststoffmaterialien unterhalb der Streckgrenze mechanisch gedehnt oder gespannt werden, kann es nach einem bestimmten Zeitraum zu Spannungsrissen im Material kommen. Die gleichzeitige Beanspruchung in Gegenwart einer veränderten chemischen Umgebung kann zu einer signifikanten Verkürzung dieses Zeitraumes führen. Dieses Phänomen wird als umgebungsbedingte Spannungsrissbildung (environmental stress cracking, ESC) bezeichnet.

Die erfindungsgemäßen Anwendungslösungen zeigen eine gute Materialverträglichkeit auf Polycarbonat-Oberflächen, Polymethylmethacrylat-Oberflächen, PC-ABS-Oberflächen (Polymerblend aus Polycarbonat/Acrylnitril-Butadien-Styrol) und/oder Polysulfon-Oberflächen, bevorzugt auf allen geprüften Oberflächenarten, gemessen als ESC-Potential ΩESC gemäß alternierender ESC-Prüfung, wobei das ESC-Potential ΩESC kleiner 1 ist, vorzugsweise kleiner 0,8, über eine Prüfdauer von 24 Stunden bei 25 °C.

Überraschenderweise zeichnet sich das erfindungsgemäße Desinfektionsmittelkonzentrat bereits bei geringen Konzentrationen von 0,5-2 Gewichtsprozent und kurzen Einwirkzeiten von 15 - 30 min durch eine ungewöhnlich gute antimikrobielle Wirksamkeit gegen M. terrae aus, d.h. das erfindungsgemäße Desinfektionsmittelkonzentrat hat eine gute Tuberkulozidie. Gleichzeitig weist das erfindungsgemäße Desinfektionsmittel eine gute Bakterizidie und eine gute Levurozidie auf.

Die durchgeführten Versuche mit dem erfindungsgemäßen Desinfektionsmittel zeigen eine Korrelation der Wirksamkeit von Mycobacterium terrae und Mycobacterium avium, d.h. beide Keime werden vergleichbar wirksam abgetötet. Sofern ein Desinfektionsmittel M. terrae und M. avium effektiv um mind. 4 log Stufen reduziert, darf es als "Mykobakterizid" ausgelobt werden. Besteht lediglich die Wirksamkeit gegen M. terrae, handelt es sich um ein "tuberkulozides Desinfektionsmittel".

Das erfindungsgemäße Desinfektionsmittelkonzentrat bzw. die erfindungsgemäße Anwendungslösung bewirkt mindestens eine log 4 Reduktion innerhalb von 15 Minuten gegenüber M. terrae gemäß den "Standardmethoden der DGHM zur Prüfung chemischer Desinfektionsverfahren" (Stand 1. September 2001) im quantitativen Suspensionsversuch. Das erfindungsgemäße Desinfektionsmittelkonzentrat bzw. die erfindungsgemäße Anwendungslösung bewirkt besonders bevorzugt mindestens eine log 4 Reduktion gegenüber M. terrae und M. avium innerhalb von 15 Minuten gemäß den "Standardmethoden der DGHM zur Prüfung chemischer Desinfektionsverfahren" (Stand 1. September 2001) im quantitativen Suspensionsversuch, insbesondere besonders bevorzugt mindestens eine log 4 Reduktion gegenüber M. terrae und M. avium innerhalb von 15 Minuten mit einer erfindungsgemäße Anwendungslösung mit einer Konzentration von 0,1- 3% . Neben den Prüfungen nach DGHM besteht auch die Möglichkeit der Prüfung nach Europäischer Norm (EN) 14348 "Chemische Desinfektionsmittel und Antiseptika - Quantitativer Suspensionsversuch zur Bestimmung der mykobakteriziden Wirkung chemischer Desinfektionsmittel im humanmedizinischen Bereich einschließlich der Instrumentendesinfektionsmittel - Prüfverfahren und Anforderungen (Phase 2, Stufe 1); Deutsche Fassung EN 14348:2005, dabei ist die Durchführung und Auswertung identisch mit den DGHM Prüfungen.

Gleichzeitig hat das erfindungsgemäße Desinfektionsmittel eine sehr gute Materialverträglichkeit, wie in Spannungsriss-Untersuchungen nachgewiesen werden konnte. Selbst gegenüber den empfindlichen Kunststoffen Polycarbonat (wie z.B. Macrolon®), Polymethylmethacrylat (wie z.B.Plexiglas®), PC-ABS und Polysulfon konnte eine gute Materialverträglichkeit nachgewiesen werden.

In diesem Zusammenhang ist insbesondere die kurze Einwirkzeit überraschend, da die meisten bisher bekannten Desinfektionsmittel, die eine tuberkulozide Wirksamkeit haben, meist erst nach 1 Stunde wirksam sind. Durch das erfindungsgemäße Desinfektionsmittel wird somit die Einwirkzeit deutlich verkürzt. Eine tuberkulozide Wirksamkeit eines Desinfektionsmittels darf ausgelobt werden, wenn die Anwendung des Desinfektionsmittels im Test zu einer Keimreduktion von mindestens 4 log-Stufen führt.

Überraschenderweise lassen sich klare Konzentrate herstellen, obwohl sowohl Salicylsäure als auch Nonansäure schlecht wasserlöslich sind und in Wasser sonst eine trübe Lösung ergeben.

### Beispiele

Es wurden Desinfektionsmittelkonzentrate mit folgenden Zusammensetzungen hergestellt und ihre antimikrobielle Wirksamkeit und ihre Materialverträglichkeit getestet.

### 1. Herstellung der Konzentrate

Es wurden Konzentrate mit den in den folgenden Tabellen angegebenen Zusammensetzungen hergestellt. Der erste Schritt der Herstellung umfasste das Vorlegen des Wassers und/oder der Lösungsvermittler in einem geeigneten Gefäß. Im nächsten Schritt wurden die organischen Säuren zugesetzt, hierdurch kam es teilweise zu einer vorübergehenden Trübung der Lösung. Im letzten Schritt wurde die nötige Menge des Tensids zugesetzt und gerührt, bis eine farblose, klare Lösung entstand, die das Konzentrat darstellt. Aus diesen Konzentraten wurden Anwendungsverdünnungen mit Wasser standardisierter Härte hergestellt und auf antimikrobielle Wirksamkeit untersucht.

Der pH-Wert aller Konzentrate, wenn nicht explizit anders genannt, lag im pH Bereich von 3,0 +/- 0,5.

**Tabelle 1: Zusammensetzungen von (mit Ausnahme von Beispiel 3) erfindungsgemässen Desinfektionsmittelkonzentraten in Gew.-%**

| | Beispiel 1 | Beispiel 2 | Beispiel 3 | Beispiel 4 | Beispiel 5 |
|---|---|---|---|---|---|
| Milchsäure (90%) | - | 12% | 12% | 15% | 10% |
| Nonansäure (97 %) | 9% | 9% | - | 9% | 3% |
| Salicylsäure (99 %) | 5% | 6% | 6% | 6% | 3% |
| Tego Betain F50 | 17% | - | - | -- | -- |
| Dehydol 04 DEO | 20% | 20% | 20% | 10% | 5% |
| Lutensol ON 110 | - | - | - | 30% | 20% |
| Propylenglykol | 13% | 15% | 15% | 10% | 10% |
| Hexylcarbitol | 9% | 10% | 10% | 10% | 5% |
| Wasser | 27% | 28% | 37% | 10% | 44% |

**Tabelle 2: Zusammensetzung erfindungsgemäßer Desinfektionsmittelkonzentrate in Gew.-%**

| | Beispiel 6 | Beispiel 7 | Beispiel 8 |
|---|---|---|---|
| Milchsäure (90%) | - | 3 | 20% |
| Nonansäure (97 %) | 6% | 3 | 3% |
| Salicylsäure (99 %) | 6% | 3 | 3% |
| Lutensol ON 110 | 30% | 30 | 30% |
| Dehydol 04 DEO | 15% | 15 | 5% |
| Propylenglykol | - | - | - |
| Hexylcarbitol | 15% | 15 | 5% |
| Wasser | 28 | 31 | 34 |

**Tabelle 3: Zusammensetzung von (mit Ausnahme der Bespiele 9 und 10) erfindungsgemässen Desinfektionsmittelkonzentraten in Gew.-%**

| | Beispiel 9 | Beispiel 10 | Beispiel 11 | Beispiel 12 | Beispiel 13 | Beispiel 14 |
|---|---|---|---|---|---|---|
| Milchsäure (90%) | - | - | 15 | 8,7 | 12 | 6,1 |
| Nonansäure (97 %) | - | - | 10 | 6 | 9 | 6,1 |
| Salicylsäure (99 %) | 6 | 6 | 7 | - | - | - |
| Tego Betain F50 | -- | -- | 10 | 17,4 | | - |
| Plurfac LF 400 | 6 | 6 | - | - | | 6,1 |
| Dehydol 04 DEO | 28 | 28 | 15 | 20 | 20 | - |
| Lutensol ON 110 | -- | -- | -- | - | - | 30,6 |
| Propylenglykol | 30 | 30 | 10 | 13 | 15 | - |
| Hexylcarbitol | 30 | 30 | 6 | 8,7 | 10 | 30,6 |
| Essigsäure (100%) | -- | -- | 7 | - | | - |
| Pyrrolidoncarbonsäure (100%) | -- | -- | 2 | - | | - |
| Natriumbenzoat | -- | -- | 5 | - | | - |
| Natriumsulfit | -- | -- | 1 | - | | - |
| Wasser | 30 | 30 | 12 | 26,2 | 34 | 20,5 |
| pH | 2,8 | 1,0 | k.A. | k.A. | k.A. | k.A. |

### Vergleichsbeispiele

**Tabelle 4: Zusammensetzung nicht erfindungsgemäßer Desinfektionsmittelkonzentrate in Gew.-% (Vergleichsbeispiele)**

| | Vergleichsbeispiel V1 | Vergleichsbeispiel V2 | Vergleichsbeispiel V3 | Vergleichsbeispiel V4 |
|---|---|---|---|---|
| Milchsäure (90%) | - | 6 | - | - |
| Nonansäure (97 %) | 6 | - | - | - |
| Salicylsäure (99 %) | - | - | - | - |
| Lutensol ON 110 | 30 | 30 | 30 | -- |
| Dehydol 04 DEO | 15 | 15 | 15 | 20 |
| Propylenglykol | - | - | - | 15 |
| Hexylcarbitol | 15 | 15 | 15 | 10 |
| Wasser | 34 | 34 | 40 | 55 |
| pH | | | | 3,0 |

### 2. Tuberkulozide, bakterizide, levurozide und mykobakterizide Wirksamkeit

Die Bestimmung der tuberkuloziden, levuroziden, mykobakteriziden Wirkung, sowie Wirkung gegen einzelne Bakterien, erfolgt im quantitativen Suspensionsversuch nach "Standardmethoden der DGHM zur Prüfung chemischer Desinfektionsverfahren" (Stand 1. September 2001). Diese beschreiben ein Prüfverfahren, sowie die Mindestanforderungen an die Wirkung von chemischen Desinfektionsmitteln und antiseptischen Produkten zur Feststellung, ob ein Antiseptikum im Rahmen des im Anwendungsbereich beschriebenen Arbeitsgebiets und Feldes eine ausreichende Wirkung aufweist oder nicht. Die Differenzierung zwischen niedriger und hoher organischer Belastung bei Produktprüfung ist ebenfalls zu entnehmen. Alle ermittelten Daten nachfolgenden wurden unter hoher organischer Belastung ermittelt:

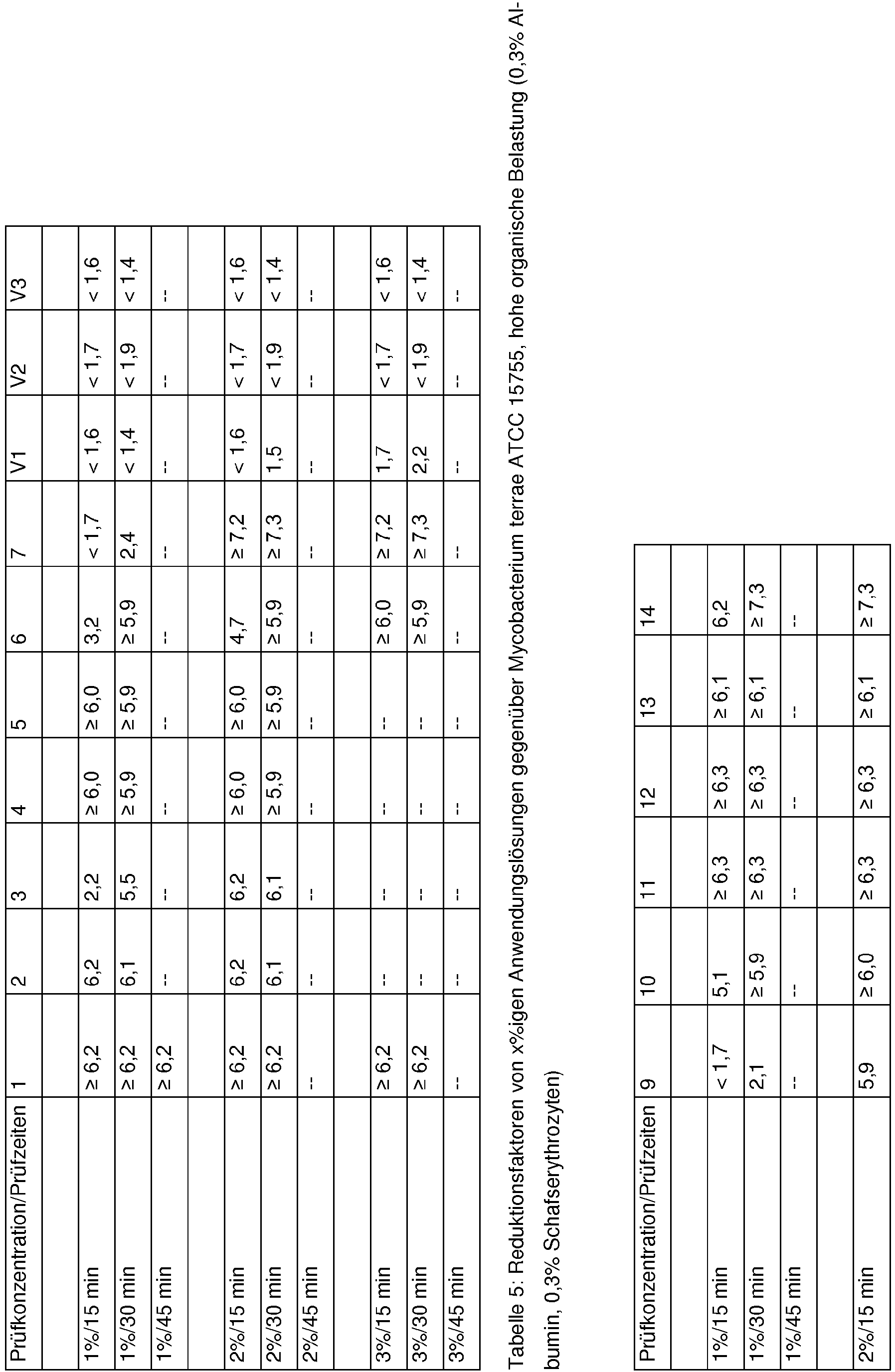

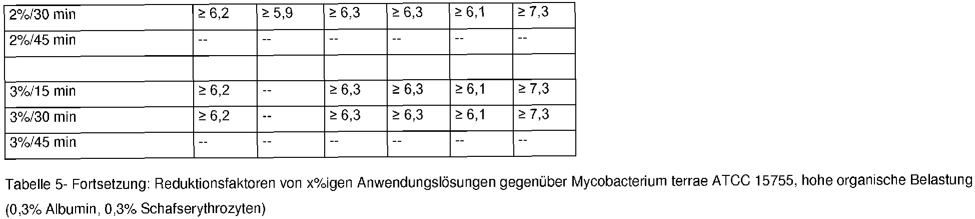

**Tabelle 6: Reduktionsfaktoren von x%igen Anwendungslösungen gegenüber Mycobacterium avium ATCC 15769 hohe organische Belastung (0,3% Albumin, 0,3% Schafserythrozyten)**

| Prüfkonzentration/Prüfzeiten | 5 | 6 | 7 | 8 | 14 |
|---|---|---|---|---|---|
| | | | | | |
| 1%/15 min | ≥ 6,1 | 3,9 | 3,7 | 4,63 | 5,1 |
| 1%/30 min | ≥ 6,0 | ≥ 6,0 | 3,8 | ≥ 6,0 | ≥ 6,0 |
| | | | | | |
| 2%/15 min | ≥ 6,1 | 5,4 | ≥ 6,1 | ≥ 6,1 | ≥ 6,1 |
| 2%/30 min | ≥ 6,0 | ≥ 6,0 | ≥ 6,0 | ≥ 6,0 | ≥ 6,0 |
| | | | | | |
| 3%/15 min | ≥ 6,1 | ≥ 6,1 | ≥ 6,1 | ≥ 6,1 | ≥ 6,1 |
| 3%/30 min | ≥ 6,0 | ≥ 6,0 | ≥ 6,0 | ≥ 6,0 | ≥ 6,0 |

**Tabelle 7: Reduktionsfaktoren von x%igen Anwendungslösungen gegenüber Pseudomas aeruginosa ATCC15442, hohe organische Belastung (0,3% Albumin, 0,3% Schafserythrozyten)**

| Prüfkonzentration/Prüfzeiten | 5 | 6 | 7 | 8 | 9 | 11 | V1 | V2 | V3 |
|---|---|---|---|---|---|---|---|---|---|
| | | | | | | | | | |
| 1%/15 min | ≥ 7,5 | ≥ 7,4 | ≥ 7,5 | ≥ 7,5 | ≥ 7,4 | ≥ 7,4 | < 1,9 | 5,5 | < 2,1 |
| 1%/30 min | ≥ 7,5 | ≥ 7,4 | ≥ 7,5 | ≥ 7,5 | ≥ 7,4 | ≥ 7,4 | < 1,9 | 5,5 | < 2,0 |
| | | | | | | | | | |
| 2%/15 min | ≥ 7,5 | ≥ 7,4 | ≥ 7,5 | ≥ 7,5 | ≥ 7,4 | ≥ 7,4 | < 1,9 | ≥ 7,5 | < 2,1 |
| 2%/30 min | ≥ 7,5 | ≥ 7,4 | ≥ 7,5 | ≥ 7,5 | ≥ 7,4 | ≥ 7,4 | < 1,9 | ≥ 7,5 | < 2,0 |
| | | | | | | | | | |
| 3%/15 min | ≥ 7,5 | ≥ 7,4 | ≥ 7,5 | ≥ 7,5 | -- | -- | < 1,9 | ≥ 7,5 | < 2,1 |
| 3%/30 min | ≥ 7,5 | ≥ 7,4 | ≥ 7,5 | ≥ 7,5 | -- | -- | < 1,9 | ≥ 7,5 | < 2,0 |

**Tabelle 8: Reduktionsfaktoren von x%igen Anwendungslösungen gegenüber Escherichia coli NCTC 10538, hohe organische Belastung (0,3% Albumin, 0,3% Schafserythrozyten)**

| Prüfkonzentration/Prüfzeiten | 5 | 6 | 7 | 8 | 9 | 11 | V1 | V2 | V3 |
|---|---|---|---|---|---|---|---|---|---|
| | | | | | | | | | |
| 1%/15 min | ≥ 7,3 | ≥ 7,7 | ≥ 7,3 | ≥ 7,3 | ≥ 7,2 | ≥ 7,2 | 6,2 | 4,6 | < 1,8 |
| 1%/30 min | ≥ 7,3 | ≥ 7,8 | ≥ 7,3 | ≥ 7,3 | ≥ 7,2 | ≥ 7,2 | 6,4 | 5,3 | < 1,8 |
| | | | | | | | | | |
| 2%/15 min | ≥ 7,3 | ≥ 7,7 | ≥ 7,3 | ≥ 7,3 | ≥ 7,2 | ≥ 7,2 | ≥ 7,7 | ≥ 7,3 | < 1,8 |
| 2%/30 min | ≥ 7,3 | ≥ 7,8 | ≥ 7,3 | ≥ 7,3 | ≥ 7,2 | ≥ 7,2 | ≥ 7,8 | ≥ 7,3 | < 1,8 |
| | | | | | | | | | |
| 3%/15 min | ≥ 7,3 | ≥ 7,7 | ≥ 7,3 | ≥ 7,3 | -- | -- | ≥ 7,7 | ≥ 7,3 | < 1,8 |
| 3%/30 min | ≥ 7,3 | ≥ 7,8 | ≥ 7,3 | ≥ 7,3 | -- | -- | ≥ 7,8 | ≥ 7,3 | < 1,8 |

**Tabelle 9: Reduktionsfaktoren von x%igen Anwendungslösungen gegenüber Staphylococcus aureus ATCC 6538, hohe organische Belastung (0,3% Albumin, 0,3% Schafserythrozyten)**

| Prüfkonzentration/Prüfzeiten | 5 | 6 | 7 | 8 | 9 | V1 | V2 | V3 |
|---|---|---|---|---|---|---|---|---|
| | | | | | | | | |
| 1%/15 min | ≥ 7,1 | 2,3 | < 1,7 | ≥ 7,1 | < 1,7 | ≥ 7,2 | < 2,0 | < 1,7 |
| 1%/30 min | ≥ 7,1 | 2,7 | < 1,7 | ≥ 7,1 | < 1,7 | ≥ 7,2 | 2,7 | < 1,7 |
| | | | | | | | | |
| 2%/15 min | ≥ 7,1 | 5,1 | 3,5 | ≥ 7,1 | 4,2 | ≥ 7,2 | < 2,0 | < 1,7 |
| 2%/30 min | ≥ 7,1 | ≥ 7,2 | 5,1 | ≥ 7,1 | 5,3 | ≥ 7,2 | < 1,7 | < 1,7 |
| | | | | | | | | |
| 3%/15 min | ≥ 7,1 | ≥ 7,4 | 6,4 | ≥ 7,1 | -- | -- | < 2,0 | < 1,7 |
| 3%/30 min | ≥ 7,1 | ≥ 7,2 | ≥ 7,1 | ≥ 7,1 | -- | -- | < 1,7 | < 1,7 |

**Tabelle 10: Reduktionsfaktoren von x%igen Anwendungslösungen gegenüber Candida albicans ATCC 10231, hohe organische Belastung (0,3% Albumin, 0,3% Schafserythrozyten)**

| Prüfkonzentration/Prüfzeiten | 2 | 3 | 6 | 7 | V1 | V2 | V3 |
|---|---|---|---|---|---|---|---|
| | | | | | | | |
| 1%/15 min | ≥ 6,0 | < 1,5 | < 1,9 | < 1,8 | < 1,9 | < 1,8 | < 1,9 |
| 1%/30 min | ≥ 6,0 | 1,6 | < 2,1 | < 1,8 | < 2,1 | < 1,8 | < 2,1 |
| | | | | | | | |
| 2%/15 min | ≥ 6,1 | ≥ 6,0 | 4,0 | < 1,8 | < 1,9 | < 1,8 | < 1,9 |
| 2%/30 min | ≥ 6,1 | ≥ 6,1 | 5,8 | < 1,8 | < 2,1 | < 1,8 | < 2,1 |
| 3%/15 min | | | 6,4 | 2,2 | < 1,9 | < 1,8 | < 1,9 |
| 3%/30 min | | | ≥ 6,6 | 2,8 | < 2,1 | < 1,8 | < 2,1 |

**Tabelle 10 -Fortsetzung: Reduktionsfaktoren von x%igen Anwendungslösungen gegenüber Candida albicans ATCC 10231, hohe organische Belastung (0,3% Albumin, 0,3% Schafserythrozyten)**

| Prüfkonzentration/Prüfzeiten | 9 | 10 | 11 | 13 | 14 |
|---|---|---|---|---|---|
| | | | | | |
| 1%/15 min | -- | -- | 5,0 | 5,7 | < 1,9 |
| 1%/30 min | 1,8 | ≥ 6,3 | ≥ 6,4 | ≥ 6,1 | < 1,8 |
| 1%/45 min | 2,0 | ≥ 6,4 | -- | -- | |
| | | | | | |
| 2%/15 min | ≥ 6,6 | ≥ 6,6 | ≥ 6,4 | 5,4 | 3,3 |
| 2%/30 min | ≥ 6,3 | ≥ 6,3 | ≥ 6,4 | ≥ 6,1 | 3,9 |
| 2%/45 min | ≥ 6,4 | ≥ 6,4 | ≥ 6,4 | -- | -- |
| | | | | | |
| 3%/15 min | ≥ 6,6 | ≥ 6,6 | ≥ 6,4 | -- | ≥ 6,3 |
| 3%/30 min | -- | -- | ≥ 6,4 | -- | ≥ 6,3 |
| 3%/45 min | -- | -- | -- | -- | -- |

Rezeptur V3 enthält eine Kombination zweier Tenside mit einem Lösungsmittel und Wasser. Die Rezepturen 98L-106 V1 und V2 enthalten die gleiche Kombination mit dem Unterschied, dass in jeder Rezeptur 6% Wassers durch je 6% Nonansäure oder Milchsäure ersetzt wurde. Die Daten des Wirksamkeitsscreenings an M. terrae machen deutlich, dass die Verwendung von Nonansäure oder Milchsäure alleine keine Wirksamkeit bei den Prüfbedingungen zeigte, Salicylsäure hingegen eine ausreichende Wirksamkeit aufweist. Die Wirksamkeit der Salicylsäure gegenüber M. terrae kann durch die "unwirksame" Nonansäure signifikant gesteigert werden kann. Es handelt sich demnach um einen Synergismus. Analog hierzu verhalten sich auch die Ergebnisse gegenüber C. albicans, S. aureus und M. avium, P. aeruginosa und E. coli wird bereits durch die Anwesenheit von 6% Salicylsäure bei minimalen Anwendungsbedingungen so stark reduziert, dass eine Differenzierung nicht mehr möglich ist.

Die M. terrae Ergebnisse von Beispiel 1 und 12, die variierende Lösemittel-Systeme, die auch neben einem nichtionischen Tensid ein amphoteres Tensid beinhalten, belegen, dass dieser Synergismus säurespezifisch ist. Beispiele 9 und 10 belegen zudem, die Wirksamkeit der Salicylsäure gegenüber M. terrae und C. albicans mit einem abweichendem Tensid-system, zudem zeigt sich die biozide Wirkung der Salicylsäure bei verschiedenen pH-Werten.

Der Synergismus von Salicylsäure und Nonansäure kann zudem durch Zusatz der ebenfalls "unwirksamen" Milchsäure noch weiter verbessert werden. Die antimikrobiellen Daten von M. terrae, S. aureus und P. aeruginosa der Rezeptur 7 zeigen diesen erweiterten Synergismus. Der weitere Zusatz von Milchsäure kann zudem zu einer Verbesserung dieser Wirksamkeiten führen, wie Rezeptur 5 zeigt.

Rezeptur 3 zeigt den wirksamen Synergismus von Salicylsäure mit Milchsäure gegen M. terrae und C. albicans. Zudem zeigt die Rezeptur 13, dass eine sehr gute tuberkulozide als auch levurozide Wirksamkeit durch Kombination von Nonansäure mit Milchsäure erhalten werden kann. Es handelt sich demnach auch hierbei um eine synergistische Zusammensetzung.

Rezeptur 2 und 4 zeigen Zusammensetzungen mit sehr guter Wirksamkeit gegenüber M. terrae und C. albicans. Rezeptur 11 zeigt zudem dass die Kombinationsmöglichkeit mit weiteren organischen Säuren besteht und die Keimreduktion hierdurch signifikant an Mykobakterien, Hefen und Bakterien gesteigert werden kann.

Alle genannten Rezepturen, die
1) Salicylsäure (nicht erfindungsgemäss) oder
2) Salicylsäure und Milchsäure (nicht erfindungsgemäss) oder
3) Nonansäure und Milchsäure oder
4) Salicylsäure, Milchsäure und Nonansäure oder
enthalten, offenbaren demnach mindestens eine tuberkulozide Wirksamkeit bis 3% bei einer Einwirkzeit von maximal 30 Minuten. Zudem ist ein Zusammenhang zwischen einer Wirksamkeit an M. terrae und M. avium gut erkennbar.

### 3. Untersuchungen zur Materialverträglichkeit

Zur Prüfung und Beurteilung des Spannungsrissverhaltens (Environmental Stress Cracking, ESC) im Biegestreifenverfahren, wurden verschiedene 2% Anwendungslösungen der Desinfektionsmittelkonzentrate gegenüber den Prüfmaterialien Plexiglas® XT 20070 (PMMA, Polymethylmethacrylat, Evonik), Makroion® 2807 (PC, Polycarbonat, Bayer), Tecason® S (PSU, Polysulfon, Ensinger) und Bayblend® FR3010(PC-ABS Blend mit Flammschutz, opak, Bayer Mat. Sc.) untersucht.

Die Prüfungen wurden in Anlehnung an die DIN EN ISO 22088 Teil 1 und 3 (ehemalige DIN 53449 Teil 3 "Beurteilung des Spannungsrissverhaltens - Biegestreifenverfahren") durchgeführt und zeigen mögliche Materialunverträglichkeiten auf.

Um eine zu rasch verlaufende Verdunstung bzw. Aufkonzentrierung des flüssigen Prüfproduktes zu verhindern, wurde ein inertes Vlies (Tecnojet A-650/1, Ahlstrom Milano) als Oberflächenauflage eingesetzt. Gleichzeitig kann durch diese Maßnahme eine komplette Benetzung der Prüfkörperoberfläche gewährleistet werden. Zur Vergleichbarkeit der Ergebnisse wurden alle Prüfungen im Klimaschrank bei einer Temperatur von 25°C und einer relativen Luftfeuchte von 50% durchgeführt.

Nach den jeweiligen Kontaktzeiten von 12, 24 und 48 Stunden wurden die Vliese sofort entfernt und die Prüfkörper vor der Trocknung in entionisiertem Wasser gespült. Nach der Trocknung wurden diese dann visuell, mit Hilfe einer Laser - Lichtquelle, auf Risse im Kanten- und Oberflächenbereich untersucht und die resultierenden Ergebnisse zur Beurteilung herangezogen.

Die Biegezugdehnung ist der Nennwert der Dehnung in der auf Zug belasteten Oberfläche eines flachen Probekörpers der Dicke h, der über ein Kreissegment mit dem Radius r gebogen wird. Der Dehnungswert ist ein Wert aus einer Reihe von Dehnungswerten, die aufeinander folgenden Probekörpern während der Belastung auferlegt werden. Das ESC-Potential Ω_{ESC} ist das Verhältnis des Wertes der im Prüfmedium bestimmten Bruchdehnung zu der bei gleicher Belastungsdauer im Referenzmedium (üblicherweise Luft) bestimmten Bruchdehnung.

Ω_{ESC} ≤ 1: Tolerierbare Beeinflussungen, die durch normale Umwelteinflüsse möglich sind und nicht dem Prüfprodukt zugeschrieben werden können. Oberhalb dieses Wertes kann ein fluides Medium, unter Berücksichtigung der Messparameter, Materialunverträglichkeiten in Form von Spannungsrissbildungen an einem Kunststoff (Prüfmaterial) auslösen.

Ω_{ESC} > 1: Beeinflussungen können dem Prüfprodukt zugeschrieben werden. Je grösser dieser Wert ist, umso stärker sind auch die Beeinflussungen. Überschreitungen bis etwa Ω_{ESC} ≤ 2, müssen im Zusammenhang der Anwendung und bestehenden Beeinflussungsparameter betrachtet und bewertet werden.

Die Ergebniswerte der Ω_{ESC} (ESC-Potentiale) sind in den nachfolgenden Tabellen gegenübergestellt.

Die erfindungsgemäßen Beispiele zeigen anhand der ESC Potentiale, dass der Zusatz von Milchsäure, Salicylsäure und/oder Nonansäure einen positiven Einfluss auf die Materialverträglichkeit hat.

**Tabelle 11: ESC-Potential Ω_{ESC} von erfindungsgemäßen Desinfektionsmitteln**

| | **Beispiel 2** | **Beispiel 7** | **Beispiel 10** |
|---|---|---|---|
| ESC (Polycarbonat nach 12h) | 0,00 | - | 0,00 |
| ESC (Polycarbonat nach 24h) | 0,17 | 0,16 | 0,18 |
| ESC (Polycarbonat nach 48h) | 0,68 | 0,73 | 0,76 |
| | | | |
| ESC (Polymethylmethacrylat 12h) | 0,13 | - | 0,00 |
| ESC (Polymethylmethacrylat 24h) | 0,23 | 0,21 | 0,23 |
| ESC (Polymethylmethacrylat 48h) | 0,55 | 0,75 | 0,82 |
| | | | |
| ESC (Polysulfon 12h) | 0,15 | | 0,00 |
| ESC (Polysulfon 24h) | 0,36 | 0,25 | 0,29 |
| ESC (Polysulfon 48h) | 0,86 | 0,80 | 0,96 |
| | | | |
| ESC (PC-ABS mFS 12h) | 0,00 | - | 0,00 |
| ESC (PC-ABS mFS 24h) | 0,14 | 0,12 | 0,13 |
| ESC (PC-ABS mFS 48h) | 0,92 | 0,69 | 0,75 |

**Tabelle 12: ESC-Potential Ω_{ESC} von Desinfektionsmitteln gemäß den Vergleichsbeispielen**

| | **V1** | **V2** | **V3** | **V4** |
|---|---|---|---|---|
| ESC (Polycarbonat nach 12h) | - | - | - | 0,17 |
| ESC (Polycarbonat nach 24h) | 0,21 | 0,13 | 0,20 | 0,43 |
| ESC (Polycarbonat nach 48h) | 0,84 | 0,67 | 0,80 | 1,67 |
| | | | | |
| ESC (Polymethylmethacrylat 12h) | - | - | - | 0,20 |
| ESC (Polymethylmethacrylat 24h) | 0,19 | 0,18 | 0,16 | 0,34 |
| ESC (Polymethylmethacrylat 48h) | 0,91 | 0,70 | 0,84 | 1,81 |
| | | | | |
| ESC (Polysulfon 12h) | - | - | - | 0,24 |
| ESC (Polysulfon 24h) | 0,28 | 0,22 | 0,22 | 0,57 |
| ESC (Polysulfon 48h) | 1,05 | 0,75 | 0,91 | 1,99 |
| | | | | |
| ESC (PC-ABS mFS 12h) | - | - | - | 0,09 |
| ESC (PC-ABS mFS 24h) | 0,11 | 0,10 | 0,08 | 0,26 |
| ESC (PC-ABS mFS 48h) | 0,73 | 0,62 | 0,61 | 1,43 |

Die Gegenüberstellung einer speziellen Ausführungsform des Desinfektionsmittels (Beispiel 2) bestehend aus Nonansäure, Salicylsäure und Milchsäure, Tensiden und Lösungsmitteln gegenüber einer Rezeptur, bei der dieser Säureanteil aus Nonansäure, Salicylsäure und Milchsäure vollständig durch Wasser ersetzt wurden (Vergleichsbeispiel 4), die übrigen Tenside und Lösungsmittel aber in gleicher Konzentration enthalten sind, macht zudem deutlich, dass der Zusatz dieser Säuren zu einer signifikanten Verbesserung der Materialverträglichkeit der beschriebener Testmaterialien beiträgt.

Dieses Phänomen wurde mit einem abweichendem Tensid/Lösungsmittel-System überprüft. Rezeptur V3 stellt hierbei die Säure-freie Variante dar. Die Gegenüberstellung mit V2 und Beispiel 7 bestätigt dieses Phänomen bei Polycarbonat, sowie Polymethylmethacrylat und Polysulfon nach 48h. Rezeptur V1 enthält lediglich Nonansäure und schneidet schlechter ab. Es deutet sich an, dass der Synergismus, der die Wirksamkeit der Desinfektionsmittelzusammensetzungen gegenüber Testorganismen verbessert, auch die Verträglichkeit gegenüber Materialien verbessert.

Die Ergebnisse der Materialverträglichkeit sind mit bei allen Rezepturen mit "sehr gut" zu bezeichnen, da es sich hierbei um Desinfektionsmittelzusammensetzungen handelt, die eine Einwirkzeit im Minutenbereich, vorzugsweise 15 - 30 Minuten, aufweisen, aber selbst nach einer Kontaktzeit von 24h, größtenteils sogar 48h, keine Hinweise auf Spannungsrissinduktion am Prüfmaterial aufzeigen.

## Patentansprüche

1. Tuberkulozides Desinfektionsmittelkonzentrat, enthaltend
a. 0,9 - 20 Gew.-% einer Kombination von Salicylsäure und
Nonansäure und
0 bis 20 Gew.-% Milchsäure,
b. mindestens ein nichtionisches Tensid,
c. Hilfsstoffe und
d. Wasser,
wobei das Konzentrat die Komponenten a bis d enthält und die Mengenangaben jeweils bezogen sind auf die Gesamtmenge des Konzentrats.

2. Desinfektionsmittelkonzentrat gemäß Anspruch 1, **dadurch gekennzeichnet, dass** das Konzentrat 0,9 bis 20 Gew.-% Milchsäure, bevorzugt 2,7 bis 15 Gew.-%, besonders bevorzugt 4,5 bis 15 Gew.-%, enthält, jeweils bezogen auf die Gesamtmenge des Konzentrats.

3. Desinfektionsmittelkonzentrat gemäß Anspruch 1 oder 2, **dadurch gekennzeichnet, dass** das Konzentrat
• 4,5 - 15 Gew.-% Milchsäure, bevorzugt 9 - 15 Gew.-%,
• 2,7 - 15 Gew.-% Nonansäure, bevorzugt 4,95 -15 Gew.-% und/oder
• 0,9 - 10 Gew.-% Salicylsäure, bevorzugt 2,9 - 10 Gew.-% enthält, jeweils bezogen auf die Gesamtmenge des Konzentrats.

4. Desinfektionsmittelkonzentrat gemäß einem der vorhergehenden Ansprüche, **dadurch gekennzeichnet, dass** das Konzentrat
• Nonansäure und Salicylsäure oder
• Milchsäure, Nonansäure und Salicylsäure enthält.

5. Desinfektionsmittelkonzentrat gemäß einem der vorhergehenden Ansprüche, **dadurch gekennzeichnet, dass** das Tensid ausgewählt ist aus der Gruppe bestehend aus Guerbet-Alkohol (10) -Ethoxylat (3EO), Guerbet-Alkohol (10) -Ethoxylat (5EO), Guerbet-Alkohol (10) -Ethoxylat (8EO), Octanol (C8) -Ethoxylat (4EO), Nonyl-Undecanol (C9/C11)-Ethoxylat (4EO), Nonyl-Undecanol (C9/C11)-Ethoxylat (6EO), Nonyl-Undecanol (C9/C11)-Ethoxylat (8EO), Isodecanol (C10) -Ethoxylat (3EO), Isodecanol (C10) -Ethoxylat (5EO), Isodecanol (C10) -Ethoxylat (6EO), Isodecanol (C10) - Ethoxylat (7EO), Isodecanol (C10) -Ethoxylat (8EO), Isodecanol (C10) -Ethoxylat (11EO), Lauryl-Myristyl-Alkohol (C12-C14) -Ethoxylat (3EO), Lauryl-Myristyl-Alkohol (C12-C14) -Ethoxylat (4EO), Lauryl-Myristyl-Alkohol (C12-C14) -Ethoxylat (5EO), Lauryl-Myristyl-Alkohol (C12-C14) -Ethoxylat (6EO), Lauryl-Myristyl-Alkohol (C12-C14) -Ethoxylat (7EO), Lauryl-Myristyl-Alkohol (C12-C14) -Ethoxylat (9EO), Lauryl-Myristyl-Alkohol (C12-C14) -Ethoxylat (10EO), Lauryl-Myristyl-Alkohol (C12-C14)-Ethoxylat (12EO), Isotridecanol (C13) -Ethoxylat (3EO), Isotridecanol (C13) - Ethoxylat (5EO), Isotridecanol (C13) -Ethoxylat (6EO), Isotridecanol (C13) -Ethoxylat (7EO), Isotridecanol (C13) -Ethoxylat (8EO), Isotridecanol (C13) -Ethoxylat (9EO), Isotridecanol (C13) -Ethoxylat (10EO), Isotridecanol (C13) -Ethoxylat (12EO), Isotridecanol (C13) -Ethoxylat (15EO), Nonyl-Phenol-Ethoxylat (4EO), Nonyl-Phenol-Ethoxylat (6EO), Nonyl-Phenol-Ethoxylat (7EO), Nonyl-Phenol-Ethoxylat (8EO), Nonyl-Phenol-Ethoxylat (9EO), Nonyl-Phenol-Ethoxylat (10EO), C9-C11 Alkohol Ethoxylat (11 EO), Phenol Ethoxylat (4EO), C16-18 Alkohol -Ethoxylat (25EO), C12-C14 Alkohol -Ethoxylat/Propoxylate (2EO/4PO), C12-C14 Alkohol -Ethoxylat/Propoxylate (5EO/4PO), C12-C14 Alkohol -Ethoxylat/Propoxylate (7,5EO/4,5PO), C13-C15 Alkohol -Ethoxylat/Propoxylate (7,5EO/4,5PO), C10-C16 Alkohol -Ethoxylat/Propoxylate (EO/PO), C12-C18 Alkohol -Ethoxylat/Propoxylate (EO/PO), Decyl-Glukoside, Hexyl-Glukoside, Octyl-Glukoside, Decyl-Octyl-Glukoside, Polyoxyethylen(20)-Sorbitan-Monolaurat, Polyoxyethylen(20)-Sorbitan-Monostearat, Polyoxyethylen(20)-Sorbitan- Monooleat, Castor Oil 12 EO, Castor Oil 15 EO, Castor Oil 20 EO, Castor Oil 25 EO, Castor Oil 28 EO, Castor Oil 32 EO oder Mischungen dieser Tenside.

6. Desinfektionsmittelkonzentrat gemäß einem der vorhergehenden Ansprüche, **dadurch gekennzeichnet, dass** nichtionisches Tensid ausgewählt ist aus:
Octanol (C8) -Ethoxylat (4EO), Isodecanol (C10) -Ethoxylat (11EO), Lauryl-Myristyl-Alkohol (C12-C14) -Ethoxylat (12EO), Isotridecanol (C13) -Ethoxylat (8EO), C9-C11 Alkohol Ethoxylat (11 EO), C16-18 Alkohol -Ethoxylat (25EO), C12-C18 Alkohol - Ethoxylat/Propoxylate (EO/PO), Decyl-Octyl-Glukoside oder Mischungen dieser Tenside.

7. Desinfektionsmittelkonzentrat gemäß einem der vorhergehenden Ansprüche, **dadurch gekennzeichnet, dass** das Konzentrat 0,5 bis 55 Gew.-%, bevorzugt 0,5 bis 40 Gew.-%, besonders bevorzugt von 3 bis 30 Gew.-% Tensid enthält.

8. Desinfektionsmittelkonzentrat gemäß einem der vorhergehenden Ansprüche, **dadurch gekennzeichnet, dass** das Konzentrat als Hilfsstoffe Lösungsvermittler und pH-Stellmittel enthält, bevorzugt Diethylenglycolmonoethylether und/oder 1,2-Propandiol.

9. Desinfektionsmittelkonzentrat gemäß einem der vorhergehenden Ansprüche, **dadurch gekennzeichnet, dass** das Konzentrat einen pH-Wert von 1 bis 5, bevorzugt 2,5 - 3,5, hat.

10. Desinfektionsmittelkonzentrat gemäß einem der vorhergehenden Ansprüche, **dadurch gekennzeichnet, dass** das Desinfektionsmittelkonzentrat besteht aus
a. 0,9 - 20 Gew.-% mindestens einer organischen Säure ausgewählt aus einer Kombination von Salicylsäure und Nonansäure und
0,1 bis 20 Gew.-% Milchsäure,
b. 0,5 bis 40 Gew.-% mindestens eines nichtionischen Tensids und
c. ggfs. eines anionischen Tensids und/ oder eines Amphotensids,
d. Hilfsstoffen und
e. Wasser,
wobei das Konzentrat aus den Komponenten a bis e besteht und sich die Komponenten zu 100 Gew.-% ergänzen.

11. Desinfektionsmittelkonzentrat gemäß einem der vorhergehenden Ansprüche, **dadurch gekennzeichnet, dass** das Konzentrat keine quartären Ammoniumverbindungen, keine Aldehyde, keine Guanidine, kein Aktivchlor, keine Amine, keine Sauerstoffabspalter, keine einwertigen Alkohole, keine aromatischen Alkohole, keine Metallionen und keine Kombinationen dieser Wirkstoffe enthält.

12. Wässrige Anwendungslösung, enthaltend 0,1 bis 10 Gew.-%, bevorzugt 0,1 bis 5 Gew.-%, besonders bevorzugt 0,5 bis 2 Gew.-% des Desinfektionsmittelkonzentrats gemäß einem der vorhergehenden Patentansprüche und Wasser.

13. Nicht-therapeutische Verwendung eines tuberkuloziden Desinfektionsmittelkonzentrats, enthaltend
a1. 0,9 - 20 Gew.-% einer Kombination von Salicylsäure und Nonansäure und 0 bis 20 Gew.-% Milchsäure,
oder
a2. 0,9 - 20 Gew.-% Nonansäure und
1,0 bis 20 Gew.-% Milchsäure,
b. mindestens ein nichtionisches Tensid,
c. Hilfsstoffe und
d. Wasser,
wobei das Konzentrat die Komponenten b bis d und a1 oder a2 enthält und die Mengenangaben jeweils bezogen sind auf die Gesamtmenge des Konzentrats, oder einer Anwendungslösung enthaltend 0,1 bis 10 Gew.-% des Desinfektionsmittelkonzentrats und Wasser zur Reduktion von M. terrae.

14. Verwendung des Desinfektionsmittelkonzentrats gemäß Patentanspruch 13 oder der Anwendungslösung gemäß Anspruch 13 zur Reduktion von M. terrae und wenigstens einem der Mikroorganismen M. avium, C. albicans, E. coli, S. aureus, P. aeruginosa, insbesondere zur Reduktion von M. terrae, M. avium und C. albicans.

## Claims

1. A tuberculocidal disinfectant concentrate containing:
a. 0.9 - 20 wt% of a combination of salicylic acid and nonanoic acid and
0 to 20 wt% lactic acid,
b. at least one nonionic surfactant,
c. excipients, and
d. water,
wherein said concentrate contains components a to d, and the quantities specified are in each case based on the total quantity of the concentrate.

2. The disinfectant concentrate according to claim 1, **characterized in that** the concentrate contains 0.9 to 20 wt% lactic acid, preferably 2.7 to 15 wt% lactic acid, and particularly preferably 4.5 to 15 wt% lactic acid, in each case based on the total quantity of the concentrate.

3. The disinfectant concentrate according to claim 1 or 2, **characterized in that** the concentrate contains:
• 4.5 - 15 wt% lactic acid, preferably 9 - 15 wt%,
• 2.7 - 15 wt% nonanoic acid, preferably 4.95 -15 wt%, and/or
• 0.9 - 10 wt% salicylic acid, preferably 2.9 - 10 wt%, in each case based on the total quantity of the concentrate.

4. The disinfectant concentrate according to one of the preceding claims, **characterized in that** the concentrate contains:
• nonanoic acid and salicylic acid, or it contains
• lactic acid, nonanoic acid, and salicylic acid

5. The disinfectant concentrate according to one of the preceding claims, **characterized in that** the surfactant is selected from the group consisting of Guerbet alcohol (10) ethoxylate (3EO), Guerbet alcohol (10) ethoxylate (5EO), Guerbet alcohol (10) ethoxylate (8EO), octanol (C8) ethoxylate (4EO), nonyl-undecanol (C9/C11) ethoxylate (4EO), nonyl-undecanol (C9/C11) ethoxylate (6EO), nonyl-undecanol (C9/C11) ethoxylate (8EO), isodecanol (C10) ethoxylate (3EO), isodecanol (C10) ethoxylate (5EO), isodecanol (C10) ethoxylate (6EO), isodecanol (C10) ethoxylate (7EO), isodecanol (C10) ethoxylate (8EO), isodecanol (C10) ethoxylate (EO11), lauryl myristyl alcohol (C12-C14) ethoxylate (3EO), lauryl myristyl alcohol (C12-C14) ethoxylate (4EO), lauryl myristyl alcohol (C12-C14) ethoxylate (5EO), lauryl myristyl alcohol (C12-C14) ethoxylate (6EO), lauryl myristyl alcohol (C12-C14) ethoxylate (7EO), lauryl myristyl alcohol (C12-C14) ethoxylate (9EO), lauryl myristyl alcohol (C12-C14) ethoxylate (10EO), lauryl myristyl alcohol (C12-C14) ethoxylate (12EO), isotridecanol (C13) ethoxylate (3EO), isotridecanol (C13) ethoxylate (5EO), isotridecanol (C13) ethoxylate (6EO), isotridecanol (C13) ethoxylate (7EO), isotridecanol (C13) ethoxylate (8EO), isotridecanol (C13) ethoxylate (9EO), isotridecanol (C13) ethoxylate (10EO), isotridecanol (C13) ethoxylate (12EO), isotridecanol (C13) ethoxylate (15EO), nonyl phenol ethoxylate (4EO), nonyl phenol ethoxylate (6EO), nonylphenol ethoxylate (7EO) nonylphenol ethoxylate (8EO), nonylphenol ethoxylate (9EO), nonylphenol ethoxylate (10EO), C9-C11 alcohol ethoxylate (11EO), phenol ethoxylate (4EO), C16-18 alcohol ethoxylate (25EO), C12-C14 alcohol ethoxylate/propoxylate (2EO/4PO), C12-C14 alcohol ethoxylate/propoxylate (5EO/4PO), C12-C14 alcohol ethoxylate/propoxylate (7.5EO/4.5PO), C13-C15 alcohol ethoxylate/propoxylate (7.5EO/4.5PO), C10-C16 alcohol ethoxylate/propoxylate (EO/PO), C12-C18 alcohol ethoxylate/propoxylate (EO/PO), decyl glucoside, hexyl glucoside, octyl glucoside, decyl-octyl glucoside, polyoxyethylene (20) sorbitan monolaurate, polyoxyethylene (20) sorbitan monostearate, polyoxyethylene (20) sorbitan monooleate, castor oil 12 EO, castor oil 15 EO, castor oil 20 EO, castor oil 25 EO, castor oil 28 EO, castor oil 32 EO, or mixtures of these surfactants.

6. The disinfectant concentrate according to one of the preceding claims, **characterized in that** the nonionic surfactant is selected from among:
octanol (C8) ethoxylate (4EO), isodecanol (C10) ethoxylate (11EO), lauryl myristyl alcohol (C12-C14) ethoxylate (12EO), isotridecanol (C13) ethoxylate (8EO), C9-C11 alcohol ethoxylate (11EO), C16-18 alcohol ethoxylate (25EO), C12-C18 alcohol ethoxylate/propoxylate (EO/PO), decyl-octyl glucoside, or mixtures of these surfactants.

7. The disinfectant concentrate according to one of the preceding claims, **characterized in that** the concentrate contains 0.5 to 55 wt% surfactant, preferably 0.5 to 40 wt% surfactant, and particularly preferably from 3 to 30 wt% surfactant.

8. The disinfectant concentrate according to one of the preceding claims, **characterized in that** the concentrate contains solubilizing agents and pH adjusting agents as excipients, preferably diethylene glycol monoethyl ether and/or 1,2-propanediol.

9. The disinfectant concentrate according to one of the preceding claims, **characterized in that** the concentrate has a pH level from 1 to 5, preferably 2.5 - 3.5.

10. The disinfectant concentrate according to any of the preceding claims, **characterized in that** the disinfectant concentrate consists of:
a. 0.9 - 20 wt% of at least one organic acid selected from a combination of salicylic acid and nonanoic acid, and 0.1 to 20 wt% lactic acid,
b. 0.5 to 40 wt% of at least one nonionic surfactant and,
c. optionally, one anionic surfactant and/or one amphoteric surfactant,
d. excipients, and
e. water,
wherein the concentrate consists of components a to e, and the components are augmented to 100 wt%.

11. The disinfectant concentrate according to one of the preceding claims, **characterized in that** the concentrate contains no quaternary ammonium compounds, no aldehydes, no guanidines, no active chlorines, no amines, no oxygen releasing agents, no monohydric alcohols, no aromatic alcohols, no metal ions, nor any combinations of these active ingredients.

12. An aqueous application solution containing 0.1 to 10 wt% of the disinfectant concentrate according to one of the preceding claims, preferably 0.1 to 5 wt% thereof, and particularly preferably 0.5 to 2 wt% thereof, and water.

13. The non-therapeutic use of a tuberculocidal disinfectant concentrate containing:
a1. 0.9 - 20 wt% of a combination of salicylic acid and nonanoic acid and 0 to 20 wt% lactic acid,
or
a2. 0.9 - 20 wt% nonanoic acid and
1.0 to 20 wt% lactic acid,
b. at least one nonionic surfactant,
c. excipients, and
d. water,
wherein the concentrate contains components b to d and a1 or a2, and the quantities specified are in each case based on the total quantity of the concentrate, or an application solution containing 0.1 to 10 wt% of the disinfectant concentrate and water for the reduction of M. terrae.

14. The use of the disinfectant concentrate according to claim 13 or the application solution according to claim 13 for the reduction of M. terrae and at least one of the microorganisms M. avium, C. albicans, E. coli, S. aureus, and P. aeruginosa, in particular for the reduction of M. terrae, M. avium, and C. albicans.

## Revendications

1. Concentré d'agent de désinfection tuberculocide, contenant
a. 0,9 - 20 % en poids d'une association d'acide salicylique et d'acide nonanoïque et
0 à 20 % en poids d'acide lactique,
b. au moins un tensioactif non ionique,
c. des adjuvants et
d. de l'eau,
le concentré contenant les composants a à d et les quantités étant indiquées chacune par rapport à la quantité totale du concentré.

2. Concentré d'agent de désinfection selon la revendication 1, **caractérisé en ce que** le concentré contient 0,9 à 20 % en poids, de préférence 2,7 à 15 % en poids, de façon particulièrement préférée 4,5 à 15 % en poids, d'acide lactique, chaque fois par rapport à la quantité totale du concentré.

3. Concentré d'agent de désinfection selon la revendication 1 ou 2, **caractérisé en ce que** le concentré contient
• 4,5 - 15 % en poids, de préférence 9 - 15 % en poids, d'acide lactique,
• 2,7 - 15 % en poids, de préférence 4,95 - 15 % en poids, d'acide nonanoïque et/ou
• 0,9 - 10 % en poids, de préférence 2,9 - 10 % en poids, d'acide salicylique, chaque fois par rapport à la quantité totale du concentré.

4. Concentré d'agent de désinfection selon l'une quelconque des revendications précédentes, **caractérisé en ce que** le concentré contient
• de l'acide nonanoïque et de l'acide salicylique ou
• de l'acide lactique, de l'acide nonanoïque et de l'acide salicylique.

5. Concentré d'agent de désinfection selon l'une quelconque des revendications précédentes, **caractérisé en ce que** le tensioactif est choisi dans l'ensemble constitué par l'éthoxylate (3 EO) d'alcool de Guerbet (10), l'éthoxylate (5 EO) d'alcool de Guerbet (10), l'éthoxylate (8 EO) d'alcool de Guerbet (10), l'éthoxylate (4 EO) d'octanol (C8), l'éthoxylate (4 EO) de nonyl-undécanol (C9/C11), l'éthoxylate (6 EO) de nonyl-undécanol (C9/C11), l'éthoxylate (8 EO) de nonyl-undécanol (C9/C11), l'éthoxylate (3 EO) d'isodécanol (C10), l'éthoxylate (5 EO) d'isodécanol (C10), l'éthoxylate (6 EO) d'isodécanol (C10), l'éthoxylate (7 EO) d'isodécanol (C10), l'éthoxylate (8 EO) d'isodécanol (C10), l'éthoxylate (11 EO) d'isodécanol (C10), l'éthoxylate (3 EO) d'alcool laurylique-myristylique (C12-C14), l'éthoxylate (4 EO) d'alcool laurylique-myristylique (C12-C14), l'éthoxylate (5 EO) d'alcool laurylique-myristylique (C12-C14), l'éthoxylate (6 EO) d'alcool laurylique-myristylique (C12-C14), l'éthoxylate (7 EO) d'alcool laurylique-myristylique (C12-C14), l'éthoxylate (9 EO) d'alcool laurylique-myristylique (C12-C14), l'éthoxylate (10 EO) d'alcool laurylique-myristylique (C12-C14), l'éthoxylate (12 EO) d'alcool laurylique-myristylique (C12-C14), l'éthoxylate (3 EO) d'isotridécanol (C13), l'éthoxylate (5 EO) d'isotridécanol (C13), l'éthoxylate (6 EO) d'isotridécanol (C13), l'éthoxylate (7 EO) d'isotridécanol (C13), l'éthoxylate (8 EO) d'isotridécanol (C13), l'éthoxylate (9 EO) d'isotridécanol (C13), l'éthoxylate (10 EO) d'isotridécanol (C13), l'éthoxylate (12 EO) d'isotridécanol (C13), l'éthoxylate (15 EO) d'isotridécanol (C13), l'éthoxylate (4 EO) de nonyl-phénol, l'éthoxylate (6 EO) de nonyl-phénol, l'éthoxylate (7 EO) de nonyl-phénol, l'éthoxylate (8 EO) de nonyl-phénol, l'éthoxylate (9 EO) de nonyl-phénol, l'éthoxylate (10 EO) de nonyl-phénol, l'éthoxylate (11 EO) d'alcools en C9-C11, l'éthoxylate (4 EO) de phénol, l'éthoxylate (25 EO) d'alcools en C16-18, l'éthoxylate/propoxylate (2 EO/4 PO) d'alcools en C12-C14, l'éthoxylate/propoxylate (5 EO/4 PO) d'alcools en C12-C14, l'éthoxylate/propoxylate (7,5 EO/4,5 PO) d'alcools en C12-C14, l'éthoxylate/propoxylate (7,5 EO/4,5 PO) d'alcools en C13-C15, l'éthoxylate/propoxylate (EO/PO) d'alcools en C10-C16, l'éthoxylate/propoxylate (EO/PO) d'alcools en C12-C18, le décyl-glucoside, l'hexyl-glucoside, l'octyl-glucoside, le décyl-octyl-glucoside, le monolaurate polyoxyéthylé (20) de sorbitane, le monostéarate polyoxyéthylé (20) de sorbitane, le mono-oléate polyoxyéthylé (20) de sorbitane, l'huile de ricin 12 EO, l'huile de ricin 15 EO, l'huile de ricin 20 EO, l'huile de ricin 25 EO, l'huile de ricin 28 EO, l'huile de ricin 32 EO ou des mélanges de ces tensioactifs.

6. Concentré d'agent de désinfection selon l'une quelconque des revendications précédentes, **caractérisé en ce que** le tensioactif non ionique est choisi parmi : l'éthoxylate (4 EO) d'octanol (C8), l'éthoxylate (11 EO) d'isodécanol (C10), l'éthoxylate (12 EO) d'alcool laurylique-myristylique (C12-C14), l'éthoxylate (8 EO) d'isotridécanol (C13), l'éthoxylate (11 EO) d'alcools en C9-C11, l'éthoxylate (25 EO) d'alcools en C16-C18, l'éthoxylate/propoxylate (EO/PO) d'alcools en C12-C18, le décyl-octyl-glucoside ou des mélanges de ces tensioactifs.

7. Concentré d'agent de désinfection selon l'une quelconque des revendications précédentes, **caractérisé en ce que** le concentré contient 0,5 à 55 % en poids, de préférence 0,5 à 40 % en poids, de façon particulièrement préférée de 3 à 30 % en poids de tensioactif.

8. Concentré d'agent de désinfection selon l'une quelconque des revendications précédentes, **caractérisé en ce que** le concentré contient en tant qu'adjuvants des tiers-solvants et des agents d'ajustement du pH, de préférence de l'éther monoéthylique de diéthylèneglycol et/ou du 1,2-propanediol.

9. Concentré d'agent de désinfection selon l'une quelconque des revendications précédentes, **caractérisé en ce que** le concentré a un pH de 1 à 5, de préférence de 2,5 à 3,5.

10. Concentré d'agent de désinfection selon l'une quelconque des revendications précédentes, **caractérisé en ce que** le concentré d'agent de désinfection est constitué de
a. 0,9 - 20 % en poids d'au moins un acide organique choisi parmi une association d'acide salicylique et d'acide nonanoïque et
0,1 à 20 % en poids d'acide lactique,
b. 0,5 à 40 % en poids d'au moins un tensioactif non ionique et
c. éventuellement un tensioactif anionique et/ou un tensioactif amphotère,
d. adjuvants et
e. eau,
le concentré étant constitué des composants a à e et la somme des composants étant égale à 100 % en poids.

11. Concentré d'agent de désinfection selon l'une quelconque des revendications précédentes, **caractérisé en ce que** le concentré ne contient pas de composés d'ammonium quaternaire, pas d'aldéhydes, par de guanidines, pas de chlore actif, pas d'amines, pas de générateurs d'oxygène, pas d'alcools monohydriques, pas d'alcools aromatiques, pas d'ions métalliques, ni d'associations de ces substances actives.

12. Solution aqueuse pour application, contenant 0,1 à 10 % en poids, de préférence 0,1 à 5 % en poids, de façon particulièrement préférée 0,5 à 2 % en poids du concentré d'agent de désinfection selon l'une quelconque des revendications précédentes et de l'eau.

13. Utilisation non thérapeutique d'un concentré d'agent de désinfection tuberculocide, contenant
a1. 0,9 - 20 % en poids d'une association d'acide salicylique et d'acide nonanoïque et 0 à 20 % en poids d'acide lactique,
ou
a.2. 0,9 - 20 % en poids d'acide nonanoïque et
1,0 à 20 % en poids d'acide lactique,
b. au moins un tensioactif non ionique,
c. des adjuvants et
d. de l'eau,
le concentré contenant les composants b à d et a1 ou a2 et les quantités étant indiquées chacune par rapport à la quantité totale du concentré ou d'une solution pour application contenant 0,1 à 10 % en poids du concentré d'agent de désinfection et de l'eau, pour la réduction de *M. terrae.*

14. Utilisation du concentré d'agent de désinfection selon la revendication 13 ou de la solution pour application selon la revendication 13, pour la réduction de *M. terrae* et d'au moins l'un des micro-organismes *M. avium, C. albicans, E. coli, S. aureus, P. aeruginosa,* en particulier pour la réduction de *M. terrae, M. avium* et *C. albicans.*
